# EUROPÄISCHE PATENTSCHRIFT

(11) **EP 0 339 055 B1**
(45) Veröffentlichungstag und Bekanntmachung des Hinweises auf die Patenterteilung: **27.01.1993**
(21) Anmeldenummer: 88908161.8
(22) Anmeldetag: 06.10.1988
(51) Int. Cl.: H01M 6/14

(54) **ELEKTROCHEMISCHE ZELLE**
ELECTROCHEMICAL CELL
PILE ELECTROCHIMIQUE

(30) Priorität: 07.10.1987 DE 3733812
(43) Veröffentlichungstag der Anmeldung: 02.11.1989
(73) Patentinhaber: SONNENSCHEIN LITHIUM GMBH, D-63654 Büdingen (DE)
(72) Erfinder: EICHINGER, Günter, D-6472 Altenstadt (DE); SEMRAU, Günter, D-6471 Kefenrod (DE)
(74) Vertreter: Baumann, Eduard, Dipl.-Phys.
(86) Internationale Anmeldenummer: DE8800617
(87) Internationale Veröffentlichungsnummer: WO8903597

(56) Entgegenhaltungen:
- DE-A- 3 702 290
- GB-A- 2 056 752
- GB-A- 2 187 590
- Chemical Abstracts, Band 107, Nr. 4, Juli 1987, (Columbus, Ohio, US)K.A. Klinedinst: "Lithium-anode cells with flowing oxyhalide electrolytes" siehe Seite 158, Zusammenfassung Nr. 25958j & Proc.-Electrochem.Soc. 1987, 87-1 (Proc.Symp.Lithium Batteries, 1986)
- Journal of Electrochemical Society, Band 128, Nr. 4, April 1981 (Manchester, New Hampshire, US), H.V. Venkatasetty et al.: "Properties of LiA1C14-SOC12 Solutions for Li/SOC12 Battery", Seiten 773-777, s. Zusammenfassung; Seite 776, Figuren 8, 9
- Journal of the Electrochemical Society, Band 130, Nr. 6, Juni 1983 (Manchester, New Hampshire, US) R.M. Murphy et al.: "The Li/C12 in SO2C12 inorganic battery system" Seiten 1231-1237, s. Zusammenfassung, Seite 1231, "Experimental"
- Extended Abstracts, Band 83, Nr. 2, 9-14. Oktober 1983 (Washington, DC, US), N. Doddapaneni: "Li/SO2-C12 system: the influence of cathode substrate and electrocatalysts on performance characteristics", Seiten 57, 58 s. den ganzen Artikel

## Beschreibung

Die Erfindung bezieht sich auf eine elektrochemische Zelle gemäß dem Oberbegriff des Anspruches 1.

Derartige Zellen weisen einen hohen gravimetrischen Energieinhalt und eine hohe Energiedichte pro Volumen auf. Darüberhinaus sind derartige Zellen in einem sehr breiten Temperaturbereich von etwa - 55 ° C, bei speziellen Ausführungsformen sogar bis + 150 ° C und höher einsetzbar. Besonders vorteilhafte Ergebnisse erzielt man mit einem Lithium-Thionylchlorid-System ( Li/SOCl₂), insbesondere auch wegen des weiten Flüssig-Temperaturbereiches von Thionylchlorid.

Elektrochemische Zellen der genannten Art sind in US-PS 4517 736, in EP-A 158 104, in der DE-A 3122080, in der DE-A 31302002 beschrieben. Dort sind aktivierbare Lithium/Thionylchlorid-Zellen dargestellt, d.h. Zellen, bei denen erst bei der Benutzungsaufnahme der Elektrolyt die Kathode benetzt. In Electrochem. Soc. 131 (1984) 1985, M. Binder, S. Gilman et al, in Electrochem. Soc. 131 (1984) 492, K. A. Klinedinst, sind aktive Lithium /Sulfurylchlorid-Zellen beschrieben, in Electrochem. Soc. 128 (1981) 1631, C.C. Liang, M.E. Bokster et al, sind aktive gewickelte D-Zellen mit Lithium/Sulfurylchlorid beschrieben, wobei dem Sulfurylchlorid Chlor beigemischt wurde. Thionylchlorid ist dort nicht beigemischt.

In der Zeitschrift J. Electrochem. Soc. Vol.128 (1981), S. 1631-1636, werden elektrochemische Zellen mit reinem Sulphurylchlorid-Elektrolyt und einem Chlor-Zusatz beschrieben. Durch den Chlor-Zusatz, dessen Menge verhältnismäßig unwesentlich ist, soll die Entladekapazität bzw. das gesamte Entlade verhalten verbessert werden, dagegen dient er nicht dazu, das Potential während der Entladung zu erhöhen. Gemäß FR-PS 2 593 968 wird einem reinen Sulphurylchlorid-Elektrolyt zur Verbesserung des Entladeverhaltens Brom statt Chlor beigefügt. Das Brom wirkt dabei als Katalysator und nicht als Oxidationsmittel, das als Depolarisator wirken könnte. Verwendet wird dieser Elektrolyt in einem Füllelement, bei dem der Elektrolyt zunächst in einem getrennten Behälter gelagert und erst bei Inbetriebsetzung in die Zelle eingeführt wird.

In der FR-PS 2 497 607 ist eine Zelle mit einer Lithium-Negativelektrode beschrieben, wobei als Elektrolyt-Lösungsmittel eine Mischung von Sulphurylchlorid und Thionylchlorid vorgeschlagen wird. Weiterhin sind eine bestimmte Lewis-Säure und ein bestimmtes Leitsalz vorgesehen.

Aus J. Electrochem. Soc., Vol.138 (1987), Heft 1, S. 258-259, sind elektrochemische Zellen mit einem Elektrolyt-Lösungsmittel in Form einer Mischung von SOCl₂ und SO₂Cl₂ bekannt. Darin wurde LiAlCl₄ gelöst. Teilweise wurde auch eine Lithium-Bezugselektrode eingesetzt. Insbesondere wurde die Zellenkapazität in Abhängigkeit von der Zusammensetzung und verschiedenen Temperaturen untersucht. Die untersuchten Gemische von Sulphurylchlorid und Thionylchlorid weisen in etwa gleiche Volumenverhältnisse auf. Ein Hinweis auf eine Reduktion von Sulphurylchlorid bei höherem Potential ist dieser Druckschrift nicht zu entnehmen. Vielmehr stellt sich bei der Entladung dieser Zelle ein Mischpotential ein.

Aus der DE-OS 32 36 042 ist eine elektrochemische Zelle mit einer Metallanode und einem Elektrolyt in Form eines Depolarisators aus Sulphurylchlorid und einem Elektrolytsalz bekannt. Zur Verbesserung der Ausbeute und Spannungserhöhung soll die Kathode mit einem Katalysator in Form eines makrozyklischen Komplexes eines Übergangsmetalles dotiert werden.

In "extended abstracts", Band 83, Nr. 2, Seite 57, Beispiele 5-16, werden Mischungen von SOCl₂ mit SO₂Cl₂ in Li- Zellen untersucht, die Li Al Cl₄ als Leitsalz verwenden. Als Kathode dient ein Acetylenruß- Substrat, welches mit einem Eisenphtalocyanin als Elektrokatalysator versehen ist.

Eine Schwierigkeit bei derartigen elektrochemischen Zellen unter Verwendung einer Leichtmetallanode ist, daß im wesentlichen sämtliche als Elektrolyt infrage kommenden nicht wäßrigen, anorganischen Lösungs mittel gegenüber einer derartigen Leichtmetallanode, insbesondere gegenüber Lithium, thermodynamisch instabil sind. Infolgedessen findet im Kontakt mit dieser Leichtmetallanode, ins besondere Lithium, eine spontane Zersetzungsreaktion des als Elektrolyt dienenden Lösungsmittels statt. Diese Reaktion läuft allerdings überraschenderweise nicht so lange ab, bis alles Lithium oder alles Lösungsmittel verbraucht ist, sondern kommt nach kurzer Zeit zum Stillstand. Dies liegt daran, daß die Reaktionsprodukte einen sehr schwer löslichen, schützenden Film auf dem Lithium bilden und somit eine weitere Reaktion des Lithiums mit dem Lösungsmittel verhindern. Dadurch ist eine langjährige Lagerzeit derartiger betriebs bereiter elektrochemischer Zellen möglich.

Für längere Lagerzeiten ist es jedoch vorteilhafter, eine elektrochemische Zelle gattungsgemäß so auszubilden, daß der Elektrolyt während der Lagerzeit völlig getrennt von der übrigen Zelle in einem geschlossenen Behälter aufbewahrt wird und erst bei der Inbetriebnahme der übrigen Zelle zugeführt wird.

Beispielsweise wird der innerhalb einer derartigen Zelle angeordnete Behälter durch einen Schlag zerstört oder anderweitig geöffnet, wobei anschließend der Elektrolyt möglichst rasch die Kathode benetzen soll. Die Zeit vom Öffnen des Behälters, beispielsweise dem mechanischen Zerschlagen eines zerbrechlichen Behälters, bis zum Erreichen einer Sollspannüng, wird als Aktivierungszeit bezeichnet. Verständlicherweise ist der mechanische Aufbau für das Erreichen einer möglichst kurzen Aktivierungszeit bedeutsam.

Darüberhinaus spielen auch chemische Vorgänge eine Rolle, wie ein begrenzter Flüssigkeitstransport und ein - wenn auch in diesem Falle dünner - Schutzfilm auf der Lithiumoberfläche.

Der Erfindung liegt das Problem zugrunde, die Aktivierungszeit einer elektrochemischen Zelle gemäß dem Oberbegriff des Anspruches 1 so zu verringern und gleichzeitig die erhaltene Sollspannung so zu erhöhen, daß ein effektiver Einsatz bei Füllelementen, bei denen der Elekrolyt erst bei Inbetriebsetzung in die Zelle eingeführt wird, möglich wird.

Das Problem wird durch die Merkmale des Kennzeichens des Anspruches 1 gelöst. Weitere Ausgestaltungen der Erfindung sind in den Unteransprüchen unter Schutz gestellt.

Durch den Erfindungsgegenstand sind somit gleichzeitig mehrere Vorteile erfüllt, nämlich zum einen ein rascherer Anstieg der Aktivierungszeit nach dem Zerbrechen oder Öffnen des Elektrolyt-Behälters, zum anderen wird eine höhere Sollspannung, damit eine höhere Leistungsfähigkeit der Batterie bei gleichen äußeren Abmessungen, erzielt.

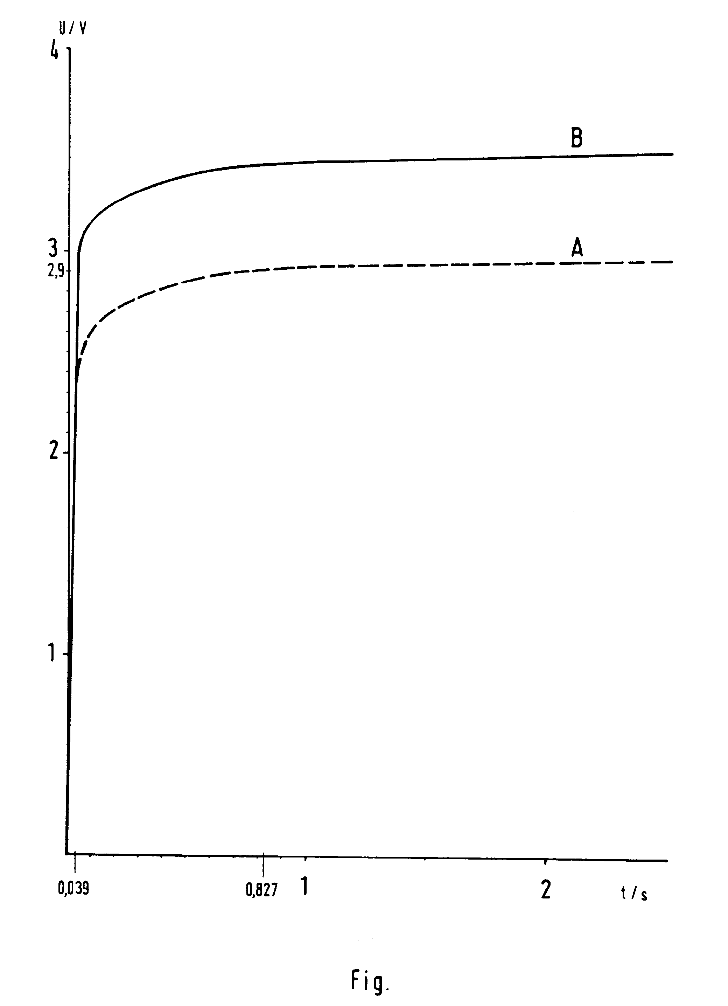

In der einzigen Figur ist der zeitliche Anstieg der Zellenspannung mit und ohne Elektrolyt-Zusatz dargestellt.

Die Ordinate zeigt hierbei die Spannung U, angegeben in Volt (V), die Abszisse zeigt die Zeit t, angegeben in Sekunden (s). Die gestrichelte Kurve A zeigt den Spannungsanstieg in einer elektrochemischen Zelle nach der Zerstörung oder Öffnung des Elektrolyt-Behälters unter Verwendung eines üblichen Elektrolyt in Form von Thionylchlorid, die Kurve B zeigt den entsprechenden Spannungsanstieg bei Zusatz des Oxidationsmittels Sulphurylchlorid in Höhe von 5 % zum Elektrolyt-Grundbestandteil in Form von Thionylchlorid.

Ein Vergleich zeigt einen erheblich rascheren Spannungs anstieg bis zu einem deutlich höheren Wert an den Zellen- Klemmen, wobei eine konstante deutlich höhere Sollspannung erhalten bleibt. Somit ist nicht nur die Aktivierungszeit bis zum Erreichen der Sollspannung kürzer, auch die Höhe der Sollspannung und damit die Leistungsfähigkeit eines derartigen Akkumulators wird vergrößert.

## Patentansprüche

1. Elektrochemische Zelle mit einer Leichtmetallanode, einer porösen Metall- oder Kohlenstoffkathode und einem flüssigen Elektrolyten in form eines nicht wäßrigen, anorganischen Lösungsmittels, bestehend aus einer Ox-Verbindung oder Oxidhalogenid-Verbindung aus der V. und/oder VI. Hauptgruppe des Periodensystems der Elemente,
dadurch gekennzeichnet,
a) daß der Elektrolyt in einem geschlossenen, von den übrigen Zellbestandteilen getrennten Behälter gelagert und bei Inbetriebsetzung in die Zelle einführbar ist,
b) daß der Grundbestandteil, des Elektrolyten Thionylchlorid ist, das zur Leitfähigkeitserhöhung Lithiumtetrachloraluminat und einen höheren Anteil an Aluminiumtrichlorid enthält,
c) daß dem Elektrolyt-Grundbestandteil ein als Oxidationsmittel wirkender Elektrolyt-Zusatz in form einer Mischung aus Sulphurylchlorid und Chlor in gegenseitigen Mengenverhältnissen von 5 : 95 Vol.-% bis zu 95: 5 Vol.-% zugesetzt wird, der bei einem höheren, das heißt positiveren Potential als der Grundbestandteil des Elektrolyten elektrochemisch reduziert wird, und in einer Menge zwischen 1 und 90 Vol.-%, vorzugsweise 1 und 10 Vol.-%, des Grundbestandteiles zugesetzt wird.
d) daß die Kathode aus Acetylenruß besteht.

2. Zelle nach Anspruch 1, dadurch gekennzeichnet, daß als Leichtmetallanode Lithium eingesetzt ist.

3. Zelle nach Anspruch 1 oder 2, dadurch gekennzeichnet, daß dem Elektrolyten unter weiterer entsprechender anteilmäßiger Verringerung des Oxidationsmittel-Zusatzes ein üblicher Katalysator zugesetzt ist, vorzugsweise ein katalytisch wirkender Übergangsmetallkomplex wie Eisenphthalocyanin.

## Claims

1. Electrochemical cell containing a light metal anode, a porous cathode of metal or carbon, and a liquid electrolyte in form of a non- watery inorganic solvent, consisting of an oxy- compound or oxidehalogenide compound of the V. and/or VI. main group of the periodic system of elements,
characterized in
a) that the electrolyte is stored in a closed container that is separated from the other components of the cell and can be inserted into the cell at the initiation of operation,
b) that the basic component of the electrolyte is thionylchloride which contains lithium tetrachloroaluminate and a larger portion of aluminum trichloride to increase the conductivity,
c) that an electrolyte admixture acting as oxidant in form of a mixture between sulfurylchloride and chlorine in mutual proportions of ingrdients from 5:95 percent by volume to 95:5 percent by volume is admixed to the basic electrolyte, which is electrochemically reduced at a higher, i.e. more positive potential than the basic electrolyte, and is added in an amount between 1 and 90 percent by volume, preferably 1 and 10 percent by volume of the basic electrolyte,
d) that the cathode consists of acetylene soot.

2. Cell according to claim 1, characterized in that the light metal anode is lithium.

3. Cell according to claim 1 or 2, characterized in that a common catalyst, prefer ably a catalytic ally acting transition metal complex such as iron phthalocyanine, is added to the electrolyte further decreasing the portion of the oxidant admixture correspondingly.

## Revendications

1. Pile électrochimique comportant une anode en métal léger, une cathode en métal ou en carbone et un électrolyte liquide ayant la forme d'un solvant anorganique non aqueux se composant d'un composé oxy ou oxydique-haloïde issus du V. ou VI. groupe principal de la classification périodique des éléments,
caractérisé en ce que
a) l'électrolyte est stocké dans un récipient fermé séparé des autres composants de la pile et pouvant être introduit dans la pile à la mise en service de cette dernière,
b) le composant de base de l'électrolyte est le chlorure de thionyle qui, pour améliorer sa conductibilité, contient de l'aluminate de tétrachlorure de lithium et une proportion supérieure de trichlorure d'aluminium,
c) l'on ajoute au composant de base de l'électrolyte dans une proportion comprise entre 1 et 90 pourcents volumétriques, de préférence entre 1 et 10 pourcents volumétriques du composant de base, un additif faisant effet d'agent d'oxydation ayant la forme d'un mélange de chlorure de sulfuryle et de chlore dans des proportions réciproques allant de 5:95 pourcents volumétriques à 95:5 pourcents volumétriques, additif qui est réduit électrochimiquement pour un potentiel plus élevé, c'est à dire plus positif que le composant de base de l'électrolyte.
d) la cathode est en noir d'acétylène.

2. Pile selon la revendication 1, caractérisée en ce que l'anode en métal léger est en lithium.

3. Pile selon la revendication 1 ou 2, caractérisée en ce que l'on ajoute à l'électrolyte un catalyseur usuel, de préférence un complexe métallifère de transition tel que le phtalocyanine de fer, tout en réduisant la proportion de l'additif faisant fonction d'agent d'oxydation.
